# EUROPÄISCHE PATENTSCHRIFT

(11) **EP 2 296 230 B1**
(45) Veröffentlichungstag und Bekanntmachung des Hinweises auf die Patenterteilung: **06.03.2013**
(21) Anmeldenummer: 10156484.7
(22) Anmeldetag: 15.03.2010
(51) Int. Cl.: H01R 4/02, H01R 4/70, H01R 43/00, H01R 4/18, H01R 4/20, H01B 7/282, H02G 15/013, H02G 15/115

(54) **Längswasser-Sperre für elektrische Leitungen**
Longitudinal water proofing for electrical cables
Verrou étanche longitudinale pour conduites électriques

(30) Priorität: 11.09.2009 DE 102009041255
(43) Veröffentlichungstag der Anmeldung: 16.03.2011
(73) Patentinhaber: ASM Automation Sensorik Messtechnik GmbH, 85452 Moosinning (DE)
(72) Erfinder: Steinich, Klaus Manfred, 85604, Zorneding / Pöring (DE)
(74) Vertreter: Alber, Norbert

(56) Entgegenhaltungen:
- EP-A1- 1 098 086
- DE-A1- 3 412 786
- US-A- 4 398 785
- US-A- 4 710 593
- US-A- 5 489 751
- US-A1- 2007 082 553

## Beschreibung

### I. Anwendungsgebiet

Die Erfindung betrifft eine Längswasser-Sperre für elektrische Mess- und Steuerleitungen.

### II. Technischer Hintergrund

Je nach Anwendungsort besteht bei elektrischen Geräten die Gefahr, dass über eine in das elektrische Gerät hineingeführte elektrische Leitung Wasser in das Gerät gelangt, was sowohl zwischen Kabelmantel und den einzelnen Aderisolierungen durch Kapillar-Effekte vorwärts dringen kann als auch zwischen den Aderisolierungen und der metallischen Ader selbst oder - falls es sich um eine aus mehreren Einzel- Litzen bestehende Leitung handelt - in den Zwischenräumen der Litze.

Sofern dieses Problem besteht, wird häufig versucht, im Inneren des elektrischen Gerätes, beispielsweise am Kontaktpunkt des elektrischen Kabels, eine Längswasser-Sperre vorzusehen.

Bei besonders kleinen elektrischen Geräten, wie etwa Sensoren, ist hierfür im Inneren des Sensors kein ausreichender Platz vorhanden, so dass eine Längswasser-Sperre im Verlauf der Leitung - vom elektrischen Gerät beabstandet - vorgesehen werden muss.

Dabei sind unterschiedliche Methoden bereits bekannt:
Eine Methode besteht darin, nach dem Auftrennen der elektrischen Leitung die blanken Aderenden wieder direkt miteinander zu verlöten, was bei Adern in Form von Litzen als sogenannte Dichtlötung das Vorwärtsdringen von Wasser innerhalb der Litzen selbst verhindert.

Um das Vorwärtsdringen zwischen Litze und Aderisolierung auszuschließen und auch um elektrischen Kontakt zwischen den blanken Adern zu verhindern, wird zuvor jedoch auf jede einzelne Ader ein Schrumpfschlauch aufgebracht und nach dem Verlöten über die Lötstelle geschoben und dicht aufgeschrumpft.

Anschließend wird entweder vom Leitungsmantel des einen Leitungsendes zum Mantel des anderen Leitungslendes ebenfalls ein Schrumpfschlauch aufgeschrumpft oder der gesamte Verbindungsbereich mittels Kunststoff umhüllt, insbesondere umspritzt oder eingegossen, sei es mit aushärtendem Kunststoff ohne Umhüllung oder durch Anordnen eines Gehäuses, in das die nicht aushärtende Vergussmasse eingebracht wird.

Eine ähnliche Methode ist als Längswassersperre im Inneren eines Gehäuses, in einem Stecker, in der DE 3412786 beschrieben.

Diese Vorgehensweise ist jedoch sehr arbeitsintensiv und daher auch fehleranfällig.

Weiterhin ist es aus der EP 1 098 086 A1 bekannt, die beidseitigen Enden des aufgetrennten Drahtes jeweils mit den Enden eines elektrischen Verbindungsteiles elektrisch leitend zu verbinden, also zu vercrimpen oder zu verlöten und diese elektrischen Verbindungseinheiten nebeneinander im Abstand liegend anschließend gemeinsam zu umspritzen.

Des Weiteren ist es aus der US 4.710,593 als nächstliegendem Stand der Technik bekannt, die aufgetrennten Enden der Drähte auf den Enden jeweils einer Leiterbahn aufzulöten, die sich auf einer gemeinsamen Platine befinden, und anschließend den gesamten Verbindungsbereich zu umspritzen oder zu umgießen.

Die US-Anmeldung 2007/0082553 zeigt ebenfalls einen einzelnen elektrischen Verbinder, an dem die Enden einer aufgetrennten Litze - insbesondere durch Löten oder Crimpen - angeschlossen werden können, wobei der Verbindungsbereich dieses einzelnen Leiters anschließend umspritzt wird.

### III. Darstellung der Erfindung

### a) Technische Aufgabe

Es ist daher die Aufgabe gemäß der Erfindung, eine Längswassersperre sowie ein Verfahren zu Ihrer Herstellung zu schaffen, welche einfach und schnell herstellbar ist und einen hohen Sicherheitsgrad gegen Längswasser bei geringen Kosten und geringer Fehlerhäufigkeit bietet.

### b) Lösung der Aufgabe

Diese Aufgabe wird durch die Merkmale der Ansprüche 1 und 5 gelöst. Vorteilhafte Ausführungsformen ergeben sich aus den Unteransprüchen.

Durch das Auflöten der einander entsprechenden Enden von abisolierten Adern der durchtrennten und abisolierten elektrischen Leitung auf verbindende Leiterbahnen wird wieder die notwendige elektrisch leitende Verbindung in der Leitung für alle Adern hergestellt.

Indem die Lötflächen auf diesen Leiterbahnen zwar auf einer gemeinsamen Platine angeordnet sind, in Querrichtung aber beabstandet sind durch Schlitze in der Platine, insbesondere die länger sind als die Lötflächen, kann einerseits wegen der einheitlichen Platine eine einfache Handhabung beim anschließenden Umhüllen, insbesondere Umspritzen oder Umgießen, erfolgen. Andererseits ist jedoch ein Kurzschluss durch eine sich zwischen den Lötflächen ausbildende Lötverbindung so gut wie ausgeschlossen, da diese über eine große Strecke in Längsrichtung, nämlich um die Enden der Schlitze herum, durchgängig ausgebildet sein müsste, da beim Verlöten die Zinken eines Lötkammes durch die Schlitze hindurch aufragen.

Durch das Verlöten der Aderenden auf der Platine wird im Fall einer aus einzelnen Drähten bestehenden Litze als Ader auch der Zwischenraum zwischen den Litzen abgedichtet.

Durch das anschließende vollständige Umhüllen mit Kunststoff werden die Enden der Leitungsisolierung einerseits und der Aderisolierungen andererseits gegen dort austretendes Längswasser abgedichtet.

Indem das Umhüllen vorzugsweise nicht in einem einzigen Schritt erfolgt - was wegen der zwingend eingenommenen Beabstandung der Lötflächen zueinander aufgrund der gemeinsamen Platine durchaus möglich wäre - wird in mindestens zwei Schritten erreicht, dass der gesamte Verbindungsbereich, also die Platine mit den Aderenden, allen Lötflächen und den Leiterbahnen vollständig vom Kunststoff umschlossen wird:
Bei einem ersten Umhüllungsschritt ist die Form so gestaltet, dass die Platine zwecks definierter Positionierung in der Form in Teilbereichen direkt an der Form anliegt, beispielsweise mit einem Teil ihrer Unter- und Oberseite sowie mit Teilbereichen ihrer Stirnflächen.

In diesem Zustand erfolgt eine teilweise Umhüllung des Verbindungsbereiches mit Kunststoff, da die an der Form anliegenden Bereiche der Platine nicht vom Kunststoff bedeckt werden können.

Im zweiten Umhüllungsschritt liegt der Verbindungsbereich vorzugsweise mit dem aus dem ersten Umhüllungsschritt bereits umhüllten und ausgehärteten Kunststoff an den Innenflächen der Form des zweiten Umhüllungsschritts an, so dass nunmehr diejenigen Bereiche der Platine, die im ersten Schritt an der Form direkt anlagen, nunmehr von der Form beabstandet sind und vom Kunststoff beim Umhüllen, insbesondere Spritzen oder Gießen, vollständig eingehüllt werden.

Zum anderen bewirkt die zweistufige Verspritzung, dass jeweils die Platine - im ersten Umhüllungsschritt direkt, im zweiten indirekt über die bereits vorhandene hälftige Umhüllung - definiert an einer Innenfläche der Form anliegt und abgestützt wird und nicht mechanisch durch das Einbringen von Kunststoff unter hohem Druck überlastet wird.

Bei einem einstufigen vollständigen Umhüllen könnte der Verbindungsbereich an den Eingängen in die Form dagegen nur am noch intakten Bereich des Leitungsmantels geklemmt werden, im Inneren der Form würde die Platine dagegen ohne Anlage an der Form frei im Forminnenraum schwebend gehalten werden.

Durch den unter Druck eingebrachten Kunststoff besteht dann die Gefahr, dass die Platine einseitig anliegend an die Innenwand der Form gedrückt wird und damit nicht vollständig vom Kunststoff umschlossen wird, oder durch die mechanische Belastung dabei sogar Lötstellen abreißen.

Dies kann zwar minimiert werden, indem als Einbringrichtung die Hauptebene der Platine gewählt wird, und die Einbringöffnungen vorzugsweise gegeneinander gerichtet von einander gegenüberliegenden Seiten angeordnet werden, aber dennoch ist hierdurch keine vollständig gleichmäßige und gleichzeitige Belastung der Platine möglich.

Somit ist anschließend vom Kunststoff die elektrische Leitung von der Außenseite des Mantels des einen Leitungsendes bis zur Außenseite des Mantels des anderen Leitungsendes und auch der gesamte Bereich dazwischen (Verbindungsbereich) vollständig umlaufend von Kunststoff dicht umhüllt, wobei der unter Druck eingespritzte oder kalt eingegossene Kunststoff auch an den Enden des Mantels als auch der Aderisolierungen sowie den blanken Teilen der Adern und der gesamten Platine dicht und/oder ohne Lufteinschlüsse anliegt.

Dadurch kann an einem Leitungsende ankommendes Längswasser - egal ob es zwischen Leitungsmantel und Aderisolierungen oder zwischen Aderisolierungen und den Adern vorwärts dringt - die Kunststoffumhüllung der Längswassersperre nicht überwinden und auch keine Querverbindungen zwischen den blanken Enden der Adern herstellen.

Die Lötflächen sind als verzinnte Endbereiche von streifenförmigen, in der Regel aus Kupfer bestehenden, Leiterbahnen ausgebildet, die sich auf der Ober- und gegebenenfalls auch Unterseite einer Platine befinden.

Die Schlitze, die das Ausbilden von Lötbrücken beim Verlöten verhindern sollen, erstrecken sich dabei wenigstens über die Länge der Lötflächen zwischen diesen Lötflächen.

Ideal ist eine Erstreckung der Schlitze über die gesamte Länge der Leiterbahnen, jedoch minimiert dies die mechanische Stabilität der Platine häufig zu stark für das sichere Umhüllen in der Form, so dass in der Regel der optimale Kompromiss darin besteht, die Schlitze etwa über die Länge der Lötflächen auszubilden und über deren Enden in Längsrichtung der Leiterbahn etwas hinausragen zu lassen.

Sofern nur auf einer Seite der Platine, also der Oberseite, Leiterbahnen und Lötflächen angeordnet sind, wird zum Verlöten der Aderenden die Platine mit den Lötflächen nach oben in eine formschlüssige Vorrichtung eingelegt, die einen von ihrem Boden aufragenden Lötkamm besitzt, dessen Zinken passgenau durch die Schlitze der Platine passen.

Sofern auf der Ober- und Unterseite jeweils Lötflächen ausgebildet sind und dort die Adern insbesondere der gleichen elektrischen Leitung gelötet werden sollen, sind hierfür möglicherweise zwei verschiedene Vorrichtungen notwendig, da dann die Platine auf halber Höhe des Querschnitts der elektrischen Leitung positioniert werden muss und auch vor der intakten Leitungsisolierung, also dem Ende des Mantels, enden muss, und dieser in der Vorrichtung definiert positioniert werden muss.

Dann werden in einer ersten Vorrichtung in einem ersten Lötschritt diejenigen Adern auf der Platine verlötet, die auf der Oberseite verlötet werden sollen, und anschließend, nach Umdrehen und gegebenenfalls Einlegen der Platine in eine zweite Vorrichtung die anderen Adern der elektrischen Leitung auf der Unterseite der Platine verlötet.

### c) Ausführungsbeispiele

Ausführungsformen gemäß der Erfindung sind im Folgenden beispielhaft näher beschrieben. Es zeigen:
- Fig. 1:: die aufgetrennte elektrische Leitung und die Platine einzeln,
- Fig. 2:: die wiederhergestellte gelötete elektrische Verbindung,
- Fig. 3:: die Figur 2 in vergrößerter Detaildarstellung,
- Fig. 4:: das Verlöten auf der Platine,
- Fig. 5:: den ersten Umhüllungsschritt,
- Fig. 6:: den zweiten Umhüllungsschritt,
- Fig. 7:: die fertige Längswassersperre,
- Fig. 8:: die wiederhergestellte gecrimpte elektrische Verbindung einad- rig,
- Fig. 9:: die wiederhergestellte gecrimpte elektrische Verbindung mehr- adrig, und
- Fig. 10:: die Lösung der Fig. 8 mit mehrstufiger Umhüllung.

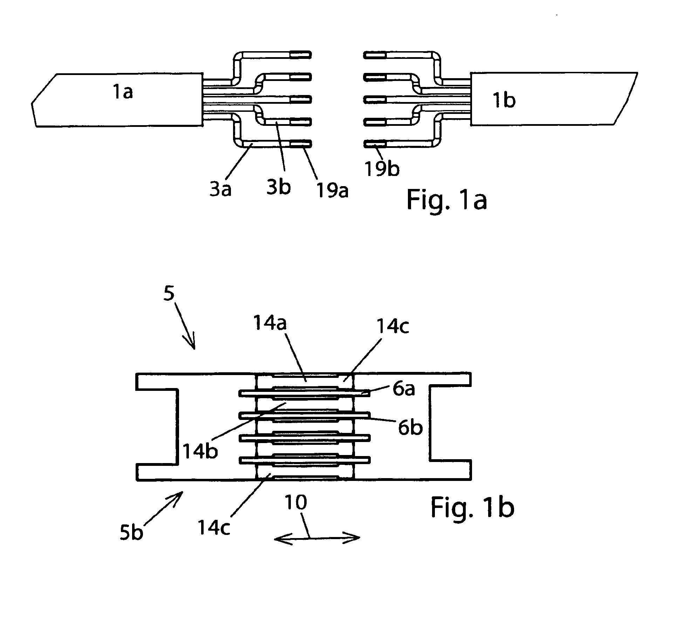

Figur 1a zeigt das an der gewünschten Stelle durchtrennte Elektrokabel 1, an dessen beiden Leitungsenden 1a, b bereits der Mantel 7a, b ein Stück weit entfernt ist, so dass die einzelnen Adern 3a, b aus dem Mantel 7a, b vorstehen, wobei auch die Enden der einzelnen Adern in ihrem Endbereich von der Aderisolierung 9a, b befreit sind und die Litzen 19a, b freiliegen.

Die Figuren 1b bis 7 zeigen die längswasserdichte Verbindung mittels Verlöten auf einer Platine:
Figur 1b zeigt separat die Platine 5, die länglich rechteckig ist und parallel im Abstand nebeneinander laufend mehrere Leiterbahnen 14a, b aufweist, deren voneinander wegweisende Enden jeweils als verzinnte Lötpads 14c ausgeführt sind.

Zwischen den einzelnen Leiterbahnen 14a, b sind - jeweils in Längsrichtung 10 der Leiterbahnen 14a,b,... und parallel zu diesen verlaufend - Schlitze 6a, b vorhanden, die in Längsrichtung über die Länge der Lötflächen 4a, b hinausgehen, aber im mittleren Bereich der Leiterbahnen 14a, b entweder unterbrochen sind (nicht dargestellt) oder über die Gesamtlänge der Leiterbahn durchgehen und sogar über deren Enden in Längsrichtung vorstehen, wie in der Figur 1b dargestellt.

In Figur 1a sind die einzelnen Adern 3a, b mit ihren Enden bereits auf denselben Abstand zueinander gebracht, den die Lötpads 14c auf der Platine 5 zueinander einnehmen.

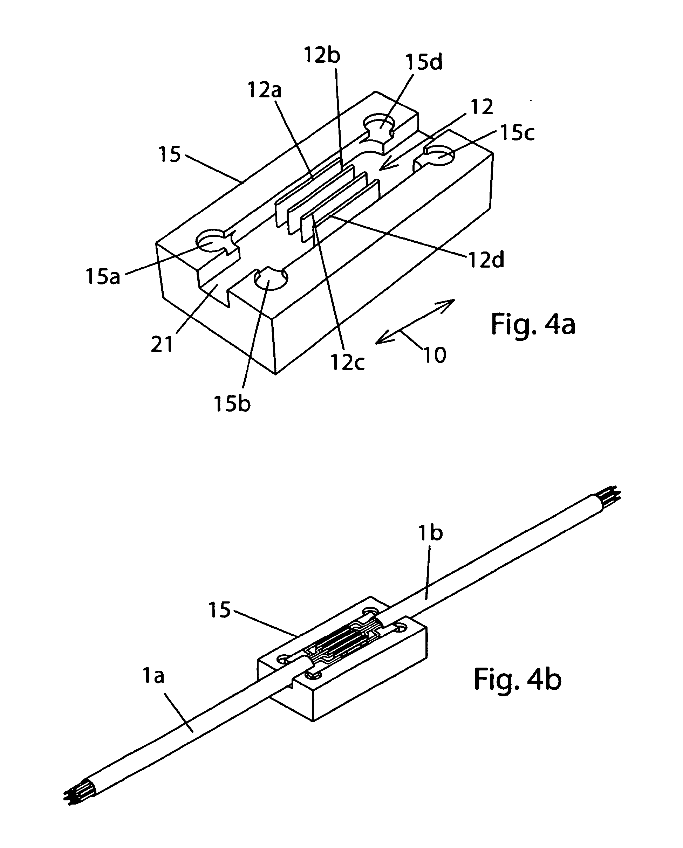

Anschließend wird die Platine 5 formschlüssig in der Lötvorrichtung 15 gemäß Figur 4a aufgenommen, in der sie mit ihren Eckbereichen aufliegt und in Längsrichtung 10 sowie Querrichtung 11 formschlüssig gehalten ist, und die einen Kabelkanal 21, dessen Boden tiefer liegt als die Auflageflächen 15a, b für die Eckbereiche, in Längsrichtung 10 durchgehend aufweist für die Aufnahme der zur Platine 5 heranzuführenden Leitungsenden 1a, b.

Von der Mitte des Bodens der Lötvorrichtung 15 ragen die Zinken 12a, b eines Lötkammes 12 auf, die so dimensioniert sind, dass sie bei einer in die Lötvorrichtung 15 eingelegten Platine 5 sich durch deren Schlitze 6a, b hindurcherstrecken und zwar deutlich über die Oberseite der Platine 5 hinaus, und dabei die Schlitze 6a, b weitestgehend ausfüllen.

Anschließend werden die abisolierten Aderenden 3a, b zunächst des einen Leitungsendes 1a auf die Lötpads 14c an dem einen Ende der Leiterbahnen 14a, b auf der Oberseite aufgelegt und dort verlötet, und anschließend auf die anderen Lötpads 14c an den anderen Enden der Leiterbahnen 14a, b die Aderenden 3a, b des anderen Kabelendes 1 b (Fig. 4b).

Dabei verhindern die über die Platine aufragenden Zinken 12a b des Lötkammes 12, das sich beim Verlöten unabsichtlich Brücken zwischen den einzelnen nebeneinander liegenden Lötpads 14c in Querrichtung 11 ausbilden und damit einen Kurzschluss zwischen den Adern 3a, b bewirken.

Die Tiefe des Kabelkanals 21 ist dabei in der Regel so bemessen, dass sich die Platine 5 auf halber Höhe des Querschnittes des Kabels 1 befindet, was immer dann notwendig ist, wenn nicht nur auf der Oberseite 5a der Platine 5 Adern verlötet werden, sondern in einem zweiten Schritt nach Umdrehen der Platine 5, auch auf deren Unterseite 5b ebenfalls Leiterbahnen 14a, b mit Lötpads 14c vorhanden sind und auch dort Adern verlötet werden, was in der Regel dann der Fall ist, wenn die Leitung eine größere Anzahl von Adern, beispielsweise mehr als vier oder fünf Adern, aufweist.

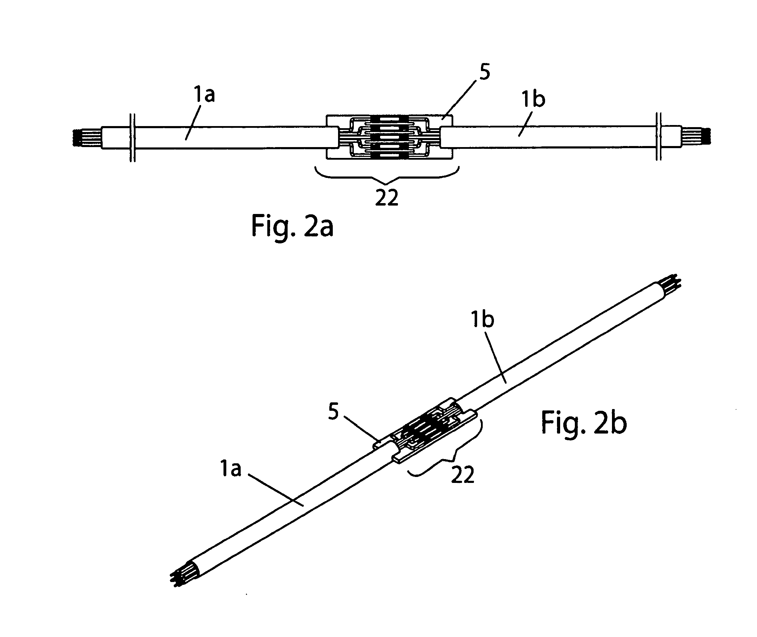

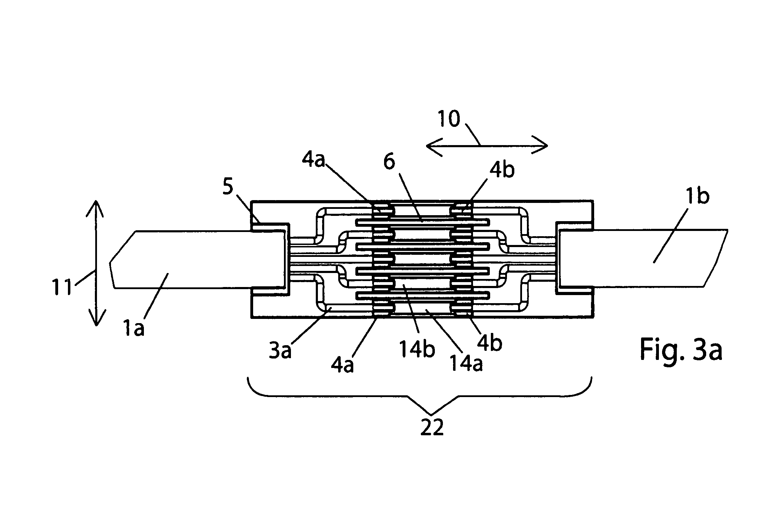

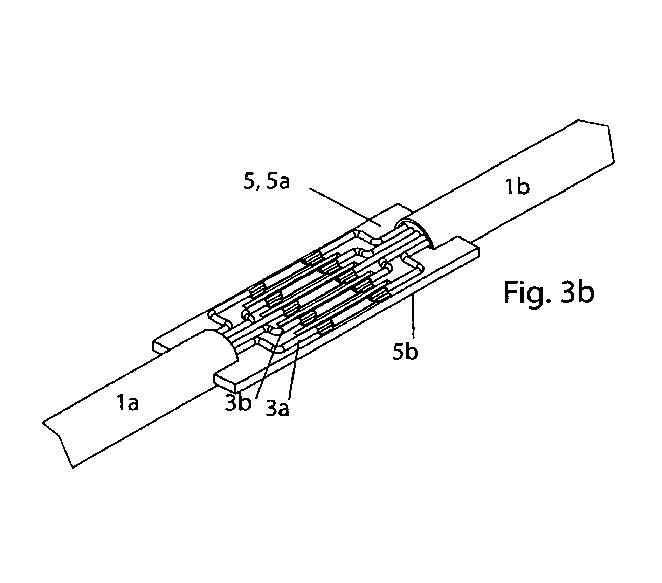

Nunmehr ist einerseits in der Leitung 1 die elektrische Verbindung wieder hergestellt und gleichzeitig sind durch das Verlöten auch Freiräume in den Litzen 19a,... selbst, also zwischen den einzelnen Drähten der Litze, geschlossen, wie in den Figuren 2a ,b und in Detailvergrößerung in den Figuren 3a,b dargestellt.

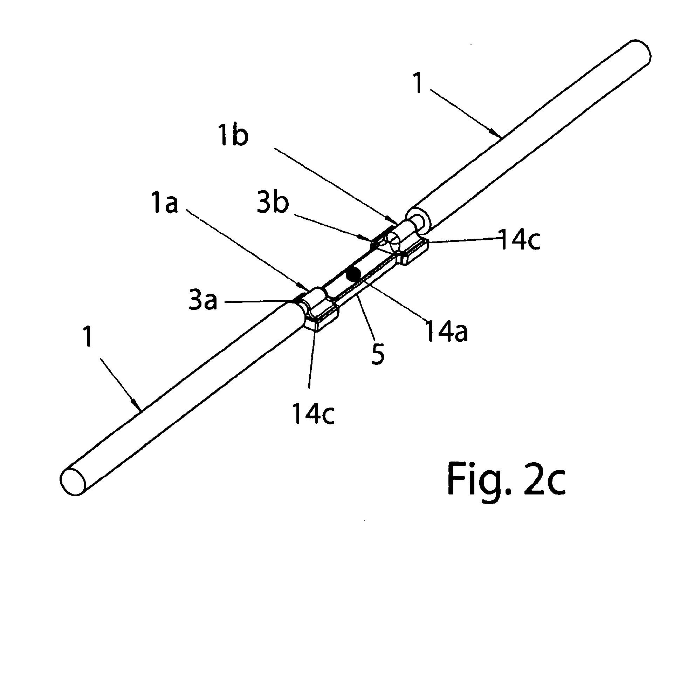

Ferner zeigt Fig. 2c eine analog wieder hergestellte einadrige elektrische Verbindung, bei der auf der Platine 5 dementsprechend nur eine einzige Leiterbahn 14a vorhanden ist, auf deren beiden endseitigen Lötpads 14c die einander entsprechenden Adern 3a,b verlötet sind.

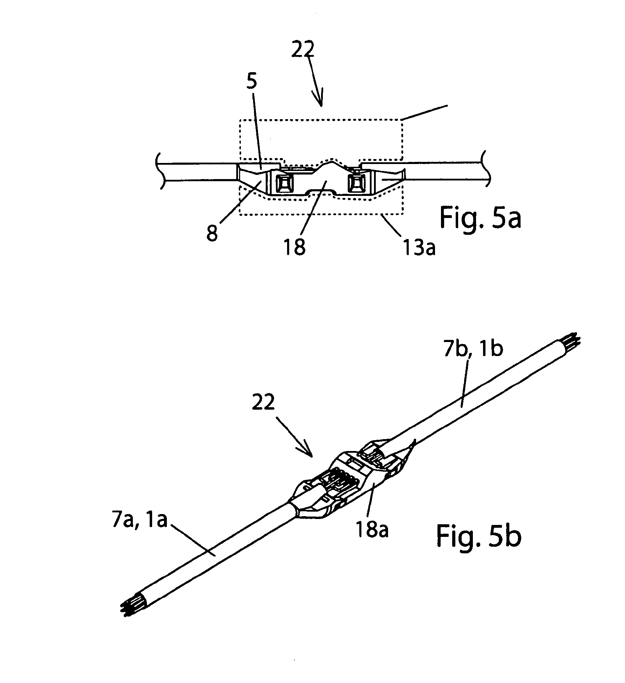

Um nun auch alle anderen Möglichkeiten für das Vordringen von Längswasser in der Leitung 1 zu verschließen, wird der gesamte Verbindungsbereich 22, also von Mantel 7a des einen Leitungsendes 1a bis zum Mantel 7b des anderen Leitungsendes 1b, in einem zweistufigen Umhüllungsvorgang mit Kunststoff dicht umhüllt:
Hierzu wird in einem ersten Umhüllungsschritt, wie in Figur 5a angedeutet, der fertig verlötete Verbindungsbereich 22 gemäß Figur 2a und 3a in eine erste Form 13a so eingelegt, dass die Platine 5 in Teilbereichen mit ihrer Oberfläche direkt an den Innenflächen der Form 13a anliegt und darin definiert formschlüssig gehalten wird.

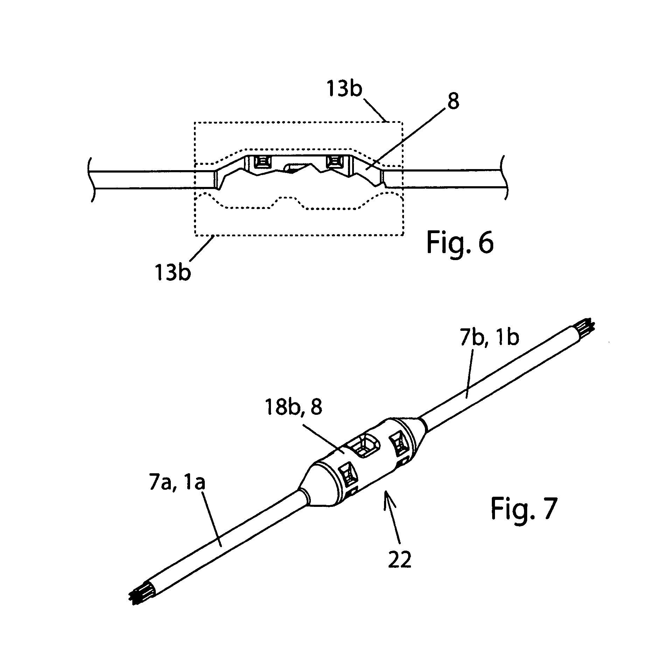

Durch das anschließende Einbringen von aushärtbarem Kunststoff 8 wird die Platine 5 in den Bereichen, in denen sie nicht an der Innenseite der Form 13a anlag, sondern Hohlräume dazwischen vorhanden waren, von dem Kunststoff 8 dicht umschlossen, und natürlich auch die in diesem Bereich liegenden Leitungsenden 1a, b sowie das Ende des Mantels 7a, b, die ebenfalls noch innerhalb der Form 13a liegen, so dass nach Aushärten und Entnahme aus der Form 13a die erste Umhüllung 18a gemäß Fig. 5a vorliegt. Anschließend wird der so mit der ersten Umhüllung 18a teilweise umhüllte Verbindungsbereich 22, wie er in Fig. 5b zu sehen ist, in eine zweite Form 13b gemäß Figur 6 eingelegt, die eine andere Innenkontur besitzt und so gestaltet ist, dass der Kunststoff 8 der ersten Umhüllung 18a nunmehr an der Innenseite der zweiten Form 13b anliegt, die noch nicht vom Kunststoff umhüllten Bereiche von Platine 5, Adern 3a,... und Mantel 7a,... dagegen zur Innenfläche der Form 13b beabstandet sind und in diesem zweiten Umhüllungsschritt nunmehr vom Kunststoff 8 der zweiten Umhüllung 18b bedeckt werden.

Dadurch ist der gesamte Verbindungsbereich 22 nunmehr dicht und lückenlos vom Kunststoff 8 der beiden Umhüllungen 18a,b umschlossen, wie Fig. 7 zeigt.

Dennoch liegt bei jedem der beiden Umhüllungsschritt die Platine 5 entweder direkt, wie im ersten Umhüllungsschritt, oder indirekt über den ausgehärteten Kunststoff 8 der ersten Umhüllung 18a, an der Innenseite der Form 13a bzw. 13b an, und wird beim Umhüllensch wenig belastet.

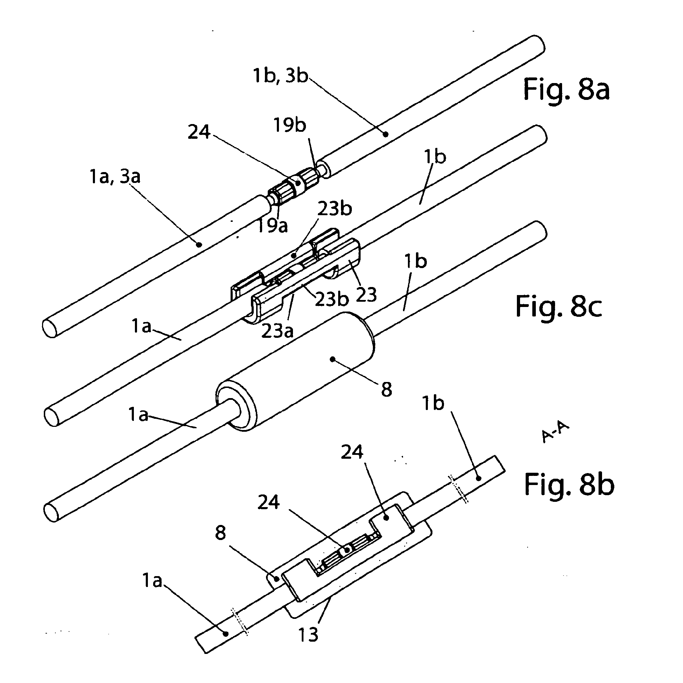

Die Figuren 8 bis 10 zeigen Lösungen, bei denen die einander entsprechenden Adern 3a,b,... der Leitungsenden 1a,b einer elektrischen Leitung 1 nicht mittels Verlöten auf einer Platine elektrisch leitend miteinander verbunden werden, sondern mittels einer dargestellten Crimphülse 24:
Wie in Fig. 8a, oberes Bild, für eine Ader 3a,b einer einadrigen Leitung 1a,b dargestellt, wird die abisolierte Litze 19a,b jeweils in eine der beiden einander gegenüber liegenden Crimpöffnungen der Crimphülse 24, die über einen metallenen Steg oder eine Hülse oder einen Rundstab elektrisch leitend miteinander verbunden sind - vorzugsweise einstückig verbunden sind - eingesteckt und durch radiales nach innen Pressen der Crimpöffnungen, das Vercrimpen mechanisch belastbar und elektrisch leitend mit den Enden der Crimphülse verbunden.

Diese wiederhergestellte elektrische Verbindung wird nun in ein Aufnahmeteil 23, das in aller Regel aus Kunststoff besteht, eingelegt (unteres Bild in Fig. 8a), welches als Positionierhilfe beim anschließenden Umhüllen mit Kunststoff 8 dient:
Das Aufnahmeteil 23 ist dabei im Querschnitt U-förmig gestaltet mit einem Freiraum, in den die elektrische Leitung 1 gerade hineinpasst. Seine Länge ist größer als der Abstand zwischen den Enden des jeweiligen Mantels 7a,b, und in dem Boden der U-Form ist eine Ausnehmung 23a vorhanden, deren Länge mindestens der Länge der Crimphülse 24 entspricht, besser dem Abstand der Enden des Mantels 7a,b.

Die U-Formen an den beiden Enden sind nur durch zwei verbleibende Längsstege 23b des Aufnahmeteils 23 miteinander verbunden.

Für das anschließende Umhüllen kann somit eine Form 13 (Fig. 8b) verwendet werden, in deren Form-Hohlraum das Aufnahmeteil 24 samt eingelegter, vercrimpter elektrischer Leitung 1 a,b passgenau Platz findet und in allen drei Raumrichtungen positioniert ist und der Verbindungsbereich 22 der Leitung 1 dennoch von allen Seiten für den Kunststoff 8 zugänglich ist, wodurch die Längsstege 23b nicht an der Crimphülse 24 anliegen.

Dadurch kann die Umhüllung mit Kunststoff 8 in einem Umhüllungsschritt erfolgen, was zwar beim Einbringen des Kunststoffs eine mechanische Belastung auf die Crimphülse 24 bewirkt, die dabei frei im Aufnahmeteil 23 und damit auch in der Form 13 hängt, jedoch ist die gecrimpte Crimphülse 24 mechanisch belastbarer als eine Platine 5 als Verbindungsteil.

Der Kunststoff 8 erstreckt sich auch hier allseitig um den Verbindungsbereich 22 herum und in der Länge vom Mantel 7a bis auf den Mantel 7b.

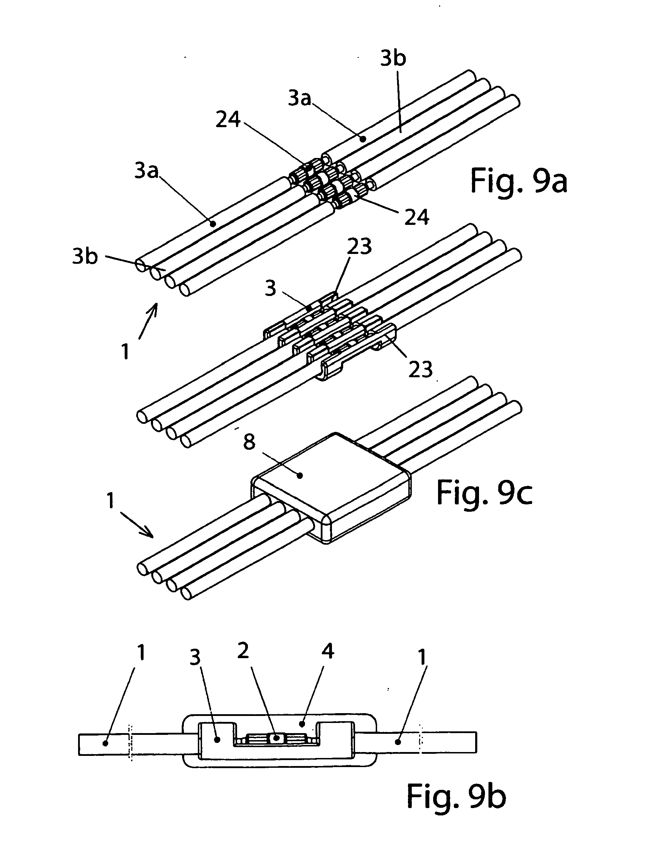

Fig. 9 zeigt die analoge Vorgehensweise bei einer elektrischen Leitung 1 mit mehreren Adern 3a,b,..., die dann jeweils einzeln in vorzugsweise ebenfalls einzelnen Doppelcrimphülsen 24 gemäß Fig. 8 vercrimpt werden und anschließend z. B. nebeneinander oder im Querschnitt in sternförmig angeordnete, einzelne oder miteinander verbundene Aufnahmeteile 23 eingelegt und anschließend gemeinsam in einem einzigen Block aus Kunststoff 8 (Fig. 9c) umhüllt werden.

Es ist nahe liegend, dass mit steigender Anzahl der Adern 3a dabei das Handling schwieriger wird als bei der Lötlösung gemäß Fig. 1 - 7.

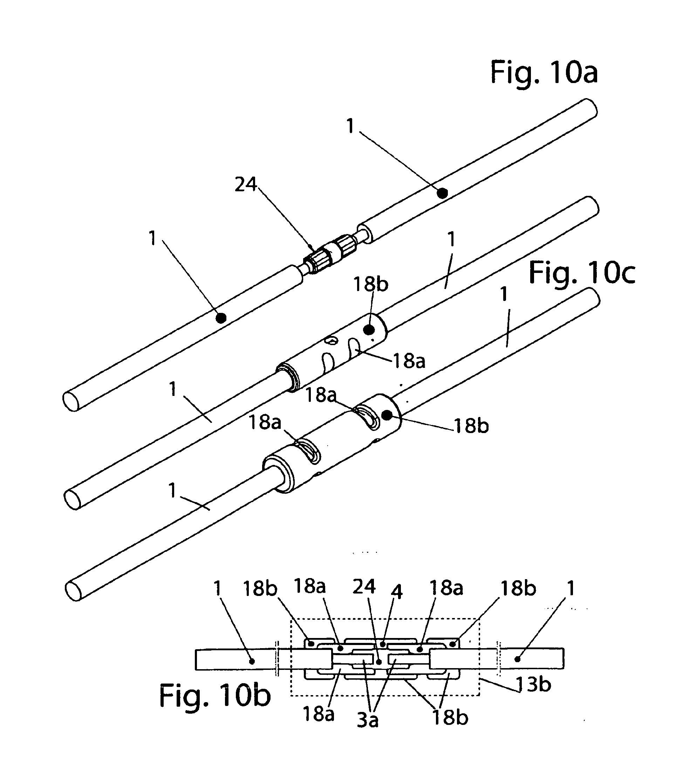

Die Figuren 10 zeigen an Hand einer einadrigen Leitung 1 ein, nach dem Vercrimpen gemäß Fig. 8a oberes Bild, zweistufiges Umhüllen, bei dem dafür jedoch auf ein separates Aufnahmeteil verzichtet werden kann:
Wie am besten Fig. 10b erkennen lässt, liegt bei der ersten Umhüllung 18a die (nicht dargestellte) erste Form am Umfang der Crimphülse 24 z. B. in deren mittleren Bereich an, und ebenso an dem Außenumfang des Mantels 7a,b der Leitung 1.

Bei der ersten Umhüllung 18a werden also Ader 3a,b und die Enden der Crimphülse 24 sowie die Enden des jeweiligen Mantels 7a,b vollumfänglich umhüllt.

Nach deren Aushärtung wird die erste Umhüllung 18a in eine zweite Form 13b eingelegt und dient nun dort als Positionierhilfe, indem die erste Umhüllung 18a wenigstens mit Teilen ihres Umfangs in der Innenfläche der zweiten Form 13b anliegt und dort in allen drei Raumrichtungen formschlüssig positioniert ist.

Dagegen stehen die im ersten Umhüllungsschritt noch nicht vom Kunststoff 8 benetzten Oberflächenbereiche des Verbindungsbereiches 22, insbesondere z. B. der mittlere Längenbereich der Crimphülse 24 und auch die Übergänge der Stirnflächen der ersten Umhüllung 18a zur Umfangsfläche des Mantels 7a,b für die zweite Umhüllung 18b offen, die insbesondere einen größeren Durchmesser besitzt als die erste Umhüllung 18a und zu dieser konzentrisch angeordnet ist.

### BEZUGSZEICHENLISTE

- 1: elektrische Leitung
- 1 a, b: Leitungsende
- 2: Längswasser-Sperre
- 3a, b..: Einzelader
- 5: Platine
- 5a: Oberseite
- 5b: Unterseite
- 6a, b: Schlitz
- 7a,b: Mantel
- 8: Kunststoff
- 9a, b...: Aderisolierung
- 10: Längsrichtung
- 11: Querrichtung
- 12a, b: Lötkamm
- 13, 13': Form
- 14a, b: Leiterbahn
- 14c: Lötpad
- 15: Lötvorrichtung
- 15a, b: Anlagefläche
- 16a, b: Einbringöffnung
- 17: Einbringrichtung
- 18: erste Umhüllung
- 19a, b: Litze
- 20: Hauptebene
- 21: Kabelkanal
- 22: Verbindungsbereich
- 23: Aufnahmeteil
- 24: Crimphülse

## Patentansprüche

1. Elektrische Leitung (1) mit Längswasser-Sperre (2), wobei
- die miteinander zu verbindenden, einander entsprechenden Leitungsenden (1a,...) der Leitung (1) die jeweils midestens eine, aufgetrennte, abisolierte Ader aben (3a,...) elektrisch leitend miteinander verbunden werden,
- der gesamte Verbindungsbereich (22) vom Mantel (7a) des einen Leitungsendes (1a) bis zum Mantel (7b) des anderen Leitungsendes (1b) von Kunststoff (8) umgeben ist,
- die mindestens eine abisolierte Ader (3a) der entsprechenden, insbesondere gegeneinander gerichteten, miteinander zu verbindenden Leitungsenden (1a, b) auf den als Lötpads (14c) ausgebildeten Enden jeweils einer streifenförmigen Leiterbahn (14a, ...) verlötet sind,
- mehrere Leiterbahnen (14a,b) in Querrichtung (11) des Kabels (1) beabstandet nebeneinander auf einer gemeinsamen Platine (5) aufgebracht sind,
**dadurch gekennzeichnet, dass**
- zwischen den Leiterbahnen (14a,b) Schlitze (6a, b) in der Platine (5) angeordnet sind.

2. Elektrische Leitung (1) nach Anspruch 1,
**dadurch gekennzeichnet, dass**
die Schlitze (6a, b) sich in wenigstens einer Längsrichtung (10) über die Enden der Leiterbahnen (14a, b) hinauserstrecken.

3. Elektrische Leitung (1) nach Anspruch 1 oder 2,
**dadurch gekennzeichnet, dass**
- die Schlitze (6a,b) von der Oberseite (5a) zur Unterseite (5b) der Platine (5) durchgehen, und/oder
- die Schlitze (6a,b) sich in Längsrichtung (10) beidseits über die Enden der Leiterbahnen (14a,b) hinauserstrecken, insbesondere im Bereich der Leiterbahn (14a,b) zwischen den Lötpads (14c) jedoch vorhanden sind.

4. Elektrische Leitung (1) nach einem der Ansprüche 1-3,
**dadurch gekennzeichnet, dass**
Leiterbahnen (14a,b) sowohl auf der Oberseite (5a) als auf der Unterseite (5b) der Platine (5) angeordnet sind und die Adern (3a,b) eines Kabels (1) teilweise auf der Oberseite (5a) und teilweise auf der Unterseite (5b) derselben Platine (5) verlötet sind.

5. Verfahren zum Herstellen einer elektrischen Leitung (1) mit Längswasser-Sperre (2) mit folgenden Verfahrensschritten:
- Durchtrennen der Leitung (1) an der für die Längswasser-Sperre (2) vorgesehenen Position,
- Entfernen des Mantels (7a,b) der Leitung (1) im jeweiligen Endbereich,
- Entfernen der Aderisolierungen (9a, b...) von den einzelnen Adern (3a,b) in den jeweiligen Endbereichen,
- elektrisch leitendes Verbinden, durch Verlöten, der einander entsprechenden Adern (3a,b) der beiden Kabelenden (1a,b) und
- Umhüllen, insbesondere Umgießen oder Umspritzen, des Verbindungsbereiches (22) mit Kunststoff (8) vom Mantel (7a) des einen Leitungsendes (1a) bis zum Mantel (7b) des anderen Leitungsendes (1b), wobei
- die einander entsprechenden Enden von Adern (3a,b) miteinander verbunden werden, indem sie auf den als Lötpads (14c) ausgebildeten, entgegengesetzten Enden einer entsprechenden streifenförmigen Leiterbahn (14a,b) verlötet werden, die insbesondere beabstandet nebeneinander auf einer gemeinsamen Platine (5) angeordnet sind,
- die Platine (5) mit den verbundenen Kabelenden (1a,b) in eine Form (13) eingelegt wird, und der gesamte Verbindungsbereich (22) vom Mantel (7a) des einen Leitungsendes (1a) bis zu dem Mantel (7b) des anderen Leitungsendes (1b) dicht mit Kunststoff (8) umhüllt, insbesondere umgossen oder umspritzt, wird,
**dadurch gekennzeichnet, dass**
- die Leiterbahnen (14a, b) durch Schlitze (6a,b) in der Platine (5) voneinander getrennt sind und
- das Verlöten durch Einlegen der Platine (5) in eine formschlüssig die Platine (5) aufnehmende Vorrichtung mit einem Lötkamm (12), dessen Zinken (12a, b) durch die Schlitze (6a,b) hindurch die Platine (5) durchdringen und die Lötflächen (4a,b) voneinander trennen, erfolgt.

6. Verfahren nach Anspruch 5,
**dadurch gekennzeichnet, dass**
- das Verlöten der Enden der Adern (3a, b) für die einen Adern zunächst auf der Oberseite (5a) der Platine (5) und anschließend für die anderen Adern (3x, y,...) auf der Unterseite (5b) der Platine (5) geschieht und hierfür unterschiedliche Vorrichtungen (15) zum Einlegen der Platine (5) verwendet werden.

7. Verfahren nach einem der vorhergehenden Verfahrensansprüche, **dadurch gekennzeichnet, dass**
- das Umhüllen des Verbindungsbereiches (22) mit Kunststoff (8) in einem einzigen Umhüllungsschritt erfolgt, oder
- das Umhüllen des Verbindungsbereiches (22) in zwei hintereinander, insbesondere in getrennten Formen (13a, b) ablaufenden, Umhüllungsschritten erfolgt.

8. Verfahren nach Anspruch 7,
**dadurch gekennzeichnet, dass**
- im ersten Umhüllungsschritt die Platine (5) in Teilbereichen sehr nahe an der Innenseite der Form (13a) positioniert ist, insbesondere an der Innenseite der ersten Form (13a) anliegt, und insbesondere
- im ersten Umhüllungsschritt die Platine (5) mit ihren Schmalseiten teilweise an der Innenfläche der ersten Form (13a) anliegt.

9. Verfahren nach einem der Ansprüche 5 bis 8,
**dadurch gekennzeichnet, dass**
- im zweiten Umhüllungsschritt der im ersten Umhüllungsschritt aufgebrachte Kunststoff (8) an der Innenseite der zweiten Form (13b) anliegt und die Platine (5) oder nirgends direkt an der Innenfläche der zweiten Form (13b) anliegt, und/oder
- die Einbringöffnungen (16a, b) wenigstens bei einem der Umhüllungsschritte auf der Höhe der Platine (5) liegen und die Einbringrichtung (17) in Richtung der Hauptebene (20) der Platine (5) gewählt wird.

10. Verfahren nach einem der Ansprüche 5-9,
**dadurch gekennzeichnet, dass**
- beim ersten Umhüllungsschritt ein gut klebender und weicher Kunststoff und beim zweiten Umhüllungsschritt ein harter und zäher Kunststoff verwendet wird, oder
- beim ersten und zweiten Umhüllungsschritt als Material für das Umhüllen der gleiche Kunststoff (8) gewählt wird.

## Claims

1. An electrical conductor (1) comprising a longitudinal water barrier (2),
- wherein conductor ends of the conductor (1) that are to be connected with one another and that correspond to one another and which respectively include at least one separated and stripped strand (3a, ...) are connected with one another in an electrically conductive manner,
- wherein the entire connection portion (22) from a jacket (7a) of the one conductor end (1a) up to the jacket (7b) of the other conductor end (1b) is enveloped by a plastic material (8),
- wherein the at least one stripped strand (3a) of the respective conductor ends (1a, b) that are respectively oriented opposite to one another and are to be connected with one another are soldered on ends of a respective strip shaped conductor path (14a, ...) that are configured as soldering pads (14c),
- wherein plural conductor paths (14a, b) are applied adjacent to one another offset from one another in transversal direction (11) of the cable (1) on a common circuit board (5) and separated from one another by slots (6a, b) in the circuit board (5),
- wherein slots (6a, b) are arranged in the circuit board (5) between the conductive paths (14a, b).

2. The electrical conductor (1) according to claim 1, wherein the slots (6a, b) extend in at least one longitudinal direction (10) beyond the ends of the conductive paths (14a, b).

3. The electrical conductor (1) according to claim 1 or 2,
- wherein the slots (6a, b) extend from a top side (5a) to a bottom side (5b) of the circuit board (5), and/or
- wherein the slots (6a, b) extend in longitudinal direction (10) on both sides beyond the ends of the conductive paths (14a, b), but are provided in particular in the portion of the conductive path (14a, b) between the soldering pads (14c).

4. The electrical conductor (1) according to one of the claims 1 through 3, wherein conductive paths (14a, b) are arranged on the top side (5a) and also on the bottom side (5b) of the circuit board (5) and the strands (3a, b) of a cable (1) are soldered partially on the top side (5a) and partially on the bottom side (5b) of the circuit board (5).

5. A method for producing an electrical conductor (1) with a longitudinal water barrier (2), comprising the steps:
- cutting the conductor (1) at the position provided for the longitudinal water barrier (2);
- removing the jacket (7a, b) of the conductor (1) in the respective end portion;
- removing the strand insulators (9a, b...) from the particular strands (3a, b) in the respective end portions;
- electrically connecting the corresponding strands (3a, b) of the two cable ends (1a, b) through soldering; and
- encasing in particular through casting or injection molding of the connection portion (22) with the plastic material (8) from the jacket (7a) of one conductor end (1a) to the jacket (7b) of the other conductor end (1b),
- connecting corresponding ends of strands (3a, b) with one another in that they are soldered on opposite corresponding ends of a strip shaped conductive path (14a, b) configured as soldering pads (14c) which are in particular arranged offset from one another on a shared circuit board (5),
- inserting the circuit board (5) with the connected cable ends (1a, b) into a mold (13) and tightly encasing the entire connection portion (22) from the jacket (7a) of the one conductor end (1a) to the jacket (7b) of the other conductor end (1b) with a plastic material (8), in particular through casting or injection molding,
- wherein the conductor paths (14a, b) are separated from one another through slots (6a, b) in the circuit board (5) and the soldering is performed by inserting the circuit board (5) in a form locking device that receives the circuit board (5) and includes a soldering comb (12) whose prongs (12a, b) permeate the circuit board (5) through the slots (6a, b) and separate the soldering surfaces (4a, b) from one another.

6. The method according to claim 5,
- wherein soldering the ends of the strands (3a, b) is performed initially for the first strands on a top side (5a) of the circuit board (5) and subsequently for the second strands (3x, y, ...) on the bottom side (5b) of the circuit board (5) and different devices (15) are used for this purpose for inserting the circuit board (5).

7. The method according to one of the preceding method claims,
- wherein encasing the connection portion (22) with plastic material (8) is performed in a single encasement step, or
- wherein encasing the connection portion (22) is performed in two encasement steps taking place one after the in particular in separate molds (13a, b).

8. The method according to claim 7,
- wherein the circuit board (5) is positioned in the first encasement step in portions proximal to an inside of the mold (13a), in particular so that it contacts the inside of the first mold (13a), and in particular,
- wherein the circuit board (5) partially contacts the inner surface of the first mold (13a) with narrow sides of the circuit board.

9. The method according to one of the claims 5 through 8,
- wherein the plastic material (8) applied in the first encasement step contacts an inside of the second mold (13b) and the circuit board (5) in the second encasement step or does not contact an inner surface of the second mold (13b) at any location and/or
- wherein the insertion openings (16a, b) at least for one of the encasement steps are at the level of the circuit board (5) and the insertion direction (17) is selected in the direction of the main plane (20) of the circuit board (5).

10. The method according to one of the claims 5 through 9,
- wherein the first encasement step uses a well gluing and soft plastic material and the second encasement step uses a hard and tough plastic material, or
- wherein the first encasement step and the second encasement step use the same plastic material (8) as encasement material.

## Revendications

1. Conduite électrique (1) avec verrou longitudinal étanche (2),
- les extrémités de conduite (1a, ...) de la conduite (1) correspondantes entre elles, qui sont à relier entre elles, qui présentent au moins respectivement une âme séparée, isolée (3a, ...), étant reliées entre elles de manière électriquement conductrice,
- l'ensemble de la zone de liaison (22) étant entouré de matière synthétique (8) depuis l'enveloppe (7a) de l'extrémité de conduite (1a) jusqu'à l'enveloppe (7b) de l'autre extrémité de conduite (1b),
- au moins une âme isolée (3a) des extrémités de liaison (1a, b) correspondantes à relier entre elles, en particulier opposées étant brasées sur des extrémités réalisées comme des brasures (14c) en forme de bande (14a,...),
- plusieurs pistes conductrices (14a, b) étant posées sur une platine commune (5) dans le sens transversal (11) du câble (1) à distance les unes à côté des autres,
**caractérisée en ce qu'**
- entre les pistes conductrices (14a, b) des fentes (6a, b) sont disposées dans la platine (5).

2. Conduite électrique (1) selon la revendication 1, **caractérisée en ce que** les fentes (6a, b) s'étendent dans au moins une direction longitudinale (10) au-delà des extrémités des pistes conductrices (14a, b).

3. Conduite électrique (1) selon la revendication 1 ou 2, **caractérisée en ce que**
- la fente (6a, b) traverse de la face supérieure (5a) a la face inférieure (5b) de la platine (5), et/ou
- les fentes (6a, b) s'étendent dans la direction longitudinale (10) de part et d'autres au-delà des extrémités des pistes conductrices (14a, b), sont cependant présentes en particulier dans la zone de la piste conductrice (14a, b) entre les brasures (14c).

4. Conduite électrique (1) selon l'une des revendications 1 à 3, **caractérisée en ce que** des pistes conductrices (14a, b) sont disposées aussi bien sur la face supérieure (5a) que sur la face inférieure (5b) de la platine et les âmes (3a, b) du câble (1) sont brasées partiellement sur la face supérieure (5a) et partiellement sur la face inférieure (5b) de la même platine (5).

5. Procédé pour la fabrication d'une conduite électrique (1) avec verrou étanche longitudinal (2) comprenant les étapes de procédé suivantes :
- sectionnement de la ligne (1) à la position prévue pour le verrou longitudinal étanche (2),
- retrait de l'enveloppe (7a, b) de la conduite (1) dans la zone d'extrémité respective,
- retrait des isolations d'âmes (9a, b...) des âmes respectives (3a, b) aux zones d'extrémités respectives,
- connexion électriquement conductrice par brasage des âmes correspondantes (3a, b) des deux extrémités de câble (1a, b), et
- enrobage, en particulier coulée ou moulage par injection de la zone de liaison (22) en plastique (8) depuis l'enveloppe (7a) d'une extrémité de ligne (1a) à l'enveloppe (7b) de l'autre extrémité de ligne (1b),
- les extrémités correspondantes d'âmes (3a, b) étant reliées entre elles dans le fait qu'elles sont brasées sur les extrémités opposées formées comme des barres (14c) d'une piste conductrice en forme de bande (14a, b), lesquelles sont disposées en particulier a distance les unes des autres sur une platine commune (5),
- la platine (5) étant insérée par les extrémités de câble reliées (1, b) dans un moule (13) et l'ensemble de la zone de liaison (22) est enrobé, en particulier, moulé ou coulé par injection depuis l'enveloppe (7a) d'une extrémité de ligne (1a) à l'enveloppe (7b) d'une autre extrémité de ligne (1b) de manière étanche par matière synthétique (8),
**caractérisée en ce que**
les pistes conductrices (14a, b) sont séparées les unes des autres par des dents (6a, b) dans la platine (5), et le brasage s'effectue par l'insertion de la platine (5) dans un dispositif logeant la patine par adhérence des formes par un dispositif logeant la platine (5) par un peigne de brasure (12) dont les dents (12a, b) traversent les fentes (6a, b) à travers la platine (5) et les surfaces de brasage (4a, b) sont séparées les unes des autres.

6. Procédé selon la revendication 5, **caractérisé en ce que**
- le brasage des extrémités des âmes (3a, b) pour l'une des âmes s'effectue tout d'abord sur la face supérieure (5a) de la platine (5) et ensuite pour les autres âmes (3x, y,...) sur la face inférieure (5b) de la platine (5) et pour ce faire des dispositifs différents (15) sont utilisés pour l'insertion de la platine (5).

7. Procédé selon l'un des revendications précédentes de procédé, **caractérisé en ce que**
- l'enrobage de la zone de connexion (22) s'effectue à l'aide de matière plastique (8) en une seule étape d'enrobage ou
- l'enrobage de la zone de liaison (22) s'effectue lors de deux étapes d'enrobage consécutives, en particulier dans des moules séparés (13a, b).

8. Procédé selon la revendication 7, **caractérisé en ce que**
- dans la première étape d'enrobage, la platine (5) est positionnée dans des zones partielles très proches de la face intérieure du moule (13a), en particulier sur la face interne du premier moule (13a) et en particulier,
- dans la première étape d'enrobage, la platine (5) s'applique par les faces étroites partiellement contre la surface interne du premier moule (13a).

9. Procédé selon l'une des revendications 5 à 8, **caractérisé en ce que**
- dans la second étape d'enrobage, la matière plastique (8) appliquée dans une première étape d'enrobage s'applique sur la face interne du second moule (13b) et la platine (5) s'applique nulle part directement sur la surface interne du second moule (13b), et/ou
- les ouvertures d'introduction (16a, b) se trouvent au moins pour l'une des étapes d'enrobage à hauteur de la platine (5) et la direction d'insertion (17) est sélectionnée en direction du plan principal (20) de la platine (5).

10. Procédé selon l'une des revendications 5 à 8, **caractérisé en ce que**
- dans la première étape d'enrobage, une matière plastique souple et bien adhésive et lors de la seconde étape d'enrobage, on utilise une matière synthétique dure et solide, ou
- dans la première et seconde étape d'enrobage, on sélectionne comme matériau pour l'enrobage la même matière synthétique (8).
